# EUROPEAN PATENT SPECIFICATION

(11) **EP 3 086 510 B1**
(45) Date of publication and mention of the grant of the patent: **01.08.2018**
(21) Application number: 14879904.2
(22) Date of filing: 14.08.2014
(51) Int. Cl.: H04L 12/24, H04L 12/911

(54) **SERVICE CHAIN MANAGEMENT METHOD, SYSTEM AND DEVICE**
DIENSTKETTENVERWALTUNGSVERFAHREN, SYSTEM UND VORRICHTUNG
PROCÉDÉ, SYSTÈME ET DISPOSITIF DE GESTION DE CHAÎNE DE SERVICE

(30) Priority: 24.01.2014 CN 201410036434
(43) Date of publication of application: 26.10.2016
(73) Proprietor: ZTE Corporation, Shenzhen, Guangdong 518057 (CN)
(72) Inventor: TAO, Quanjun, Shenzhen Guangdong 518057 (CN); WU, Se, Shenzhen Guangdong 518057 (CN); ZHOU, Jianfeng, Shenzhen Guangdong 518057 (CN); TIAN, Tian, Shenzhen Guangdong 518057 (CN)
(74) Representative: Schröer, Gernot H.
(86) International application number: PCT/CN2014/084382
(87) International publication number: WO 2015/109821

(56) References cited:
- CN-A- 101 090 377
- CN-A- 101 764 791
- US-A1- 2007 027 974
- US-A1- 2012 281 540
- US-A1- 2013 124 708
- US-A1- 2013 272 305
- US-A1- 2014 010 084
- US-B1- 8 612 612

## Description

### Technical Field

The present invention relates to a mobile value-added service network technology, in particular to a service chain management method, system and device.

### Background of the Related Art

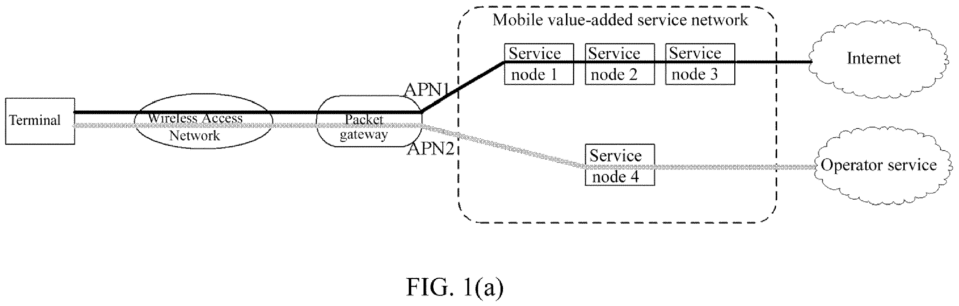

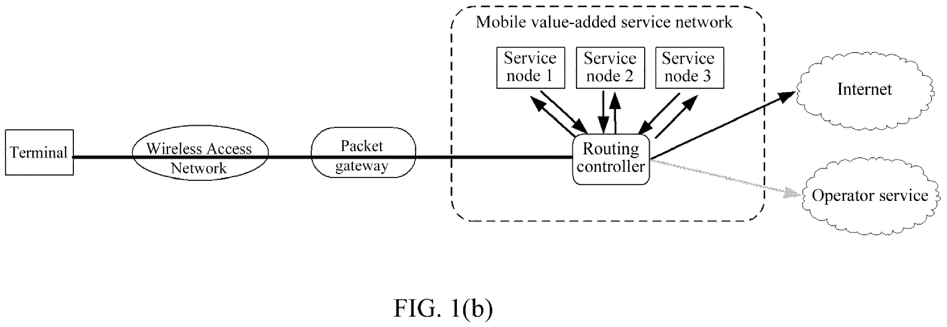

At present, in order to improve quality of experience of users and reduce network bandwidth pressure, operators provide value-added service by deploying mobile value-added service networks. Service Chains(SCs) of mobile value-added service networks in the related art mainly have two modes. FIG. 1(a) is a service chain mode 1 of a mobile value-added service network in the related art; and FIG. 1(b) is a service chain mode 2 of a mobile value-added service network in the related art.

As shown in FIG. 1(a), in mode 1, service nodes are statically linked together through a switch, and a packet gateway uses Access Point Names(APNs) to distinguish different service chains. After the packet gateway receives a message, the packet gateway transmits the message to the corresponding service chain according to the APN in the message. In mode 1, the service chain corresponding to the APN is relatively static, the service nodes can only be deployed according to a given order, a network topology change will be caused when a service node is added into or removed from the service chain or the logic of the service chain is simply changed, artificial reconfiguration is needed and it is difficult to adapt to elastic quick service deployment change.

As shown in FIG. 1(b), in mode 2, all service nodes are connected to a routing controller, a packet gateway transmits a message to the routing controller, the routing controller decides a next-hop service node, the service node performs related processing after receiving the message, the processed message is transmitted to the routing controller, and the routing controller then decides a next-hop service node till accessing to the Internet or a mobile value-added service network. In mode 2, a CAPital eXpendicture(CAPX) of the routing controller is high and the function thereof is overlapped with the function of the packet gateway.

US 2014010084 A1 discloses a method for configuring a network element for load balancing based on input provided by a mobile gateway, where the configuring includes selecting an instance of a service flow router control function at the network element based on an Internet protocol address assigned to a subscriber.

### Summary of the Invention

The present invention provide a service chain management system according to claim 1, a policy control device according to claim 7 and a service chain management method according to claim 9.

Also provided is a service chain management system, comprising a service arrangement device, a policy control device and a policy execution device, wherein:
the service arrangement device is configured to generate a service chain mapping table and send the service chain mapping table to the policy control device, the service chain mapping table comprises service chain identifications and corresponding service chain condition features;
the policy control device is configured to search for a corresponding service chain identification in the service chain mapping table according to a service chain condition feature of user equipment and generate a policy rule table and/or a service detection rule table of the user equipment, the policy rule table and/or the service detection rule table comprises service chain identification operation information; and
the policy execution device is configured to receive a message and execute a policy rule and/or a service detection rule for the received message according to the policy rule table and/or the service detection rule table.

More preferably, the service arrangement device is further configured to arrange a service logic link table, the service logic link table comprises service chain identifications and corresponding service node arrangement sequences;
the system further comprises a network management device and a switching device;
the policy execution device is further configured to forward the message obtained after the execution of the policy rule and/or service detection rule to the switching device;
the network management device is configured to generate a service chain routing table according to a network topology and the service logic link table; and
the switching device is configured to forward the message obtained after the execution of the policy rule and/or the service detection rule according to the service chain routing table.

More preferably, the policy rule table and/or the service detection rule further comprises a service judgment template.

More preferably, the service judgment template comprises service types and field information for judging the service types.

More preferably, the service chain identification operation information is used for instructing the policy execution module to add a service chain identification at a specific position in the message obtained after the execution of the policy rule and/or the service detection rule, the specific position is statically configured by the policy control module or is indicated by the service arrangement module in the service chain mapping table.

More preferably, the service chain condition features comprise service types, user levels, access types and wireless network states; and the policy control device is configured to:
when the user equipment accesses to a network, search for a corresponding service type in the service chain condition features of the service chain mapping table according to a user level, an access type and a wireless network state of the user equipment, search for corresponding field information for judging the service type in the service identification template according to the searched service type, and if judging that the searched field information for judging the service type is one or a combination of a plurality of fields at layers 2-4, save a user identification in the policy rule table of the user, and save the searched service type and the field information for judging the service type in the service judgment template of the policy rule table of the user; and
if judging that the searched field information for judging the service type is fields at layers 4-7, save the user identification in the service detection rule table of the user, and save the searched service type and the field information for judging the service type in the service judgment template of the service detection rule table of the user,
wherein the service identification template is generated by the service arrangement device or is statically configured by the policy control device; and the service identification template comprises the service types and the field information for judging the service types.

More preferably, the policy execution device is configured to:
save the policy rule table and the service detection rule table; receive a message, search for a service type of the received message in the service judgment template in the policy rule table according to field information for judging the service type in the message, insert a service chain identification in the received message according to an operation corresponding to the searched service type, and forward the message obtained after the insertion of the service chain identification to the switching device.

More preferably, the policy execution device is further configured to:
when the service type of the received message is not searched in the service judgment template in the policy rule table, search for the service type of the received message in the service judgment template in the service detection rule table, insert the service chain identification in the received message according to an operation corresponding to the searched service type, and forward the message to the switching device.

More preferably, the policy execution device is further configured to:
when the service type of the received data message is not searched in the service judgment template of the service detection rule table, exit service chain processing.

More preferably, the service nodes consist of addresses of hosts or virtual machines, or addresses and instance identifications of the hosts or the virtual machines.

More preferably, the network management device is configured to:
acquire address information of a service chain table node in the service logic link table; acquire a switching device related to the service chain table node according to information of the network topology; and generate a service chain routing table corresponding to the switching device according to the service logic link table and send the service chain routing table to the switching device.

More preferably, the service chain routing table comprises input ports, service chain identifications and corresponding output ports.

The embodiment of the present invention further provides a service arrangement device, comprising:
a generation module configured to generate a service chain mapping table and send the service chain mapping table to a policy control device, wherein the service chain mapping table comprises service chain identifications and corresponding service chain condition features.

More preferably, the generation module is further configured to arrange a service logic link table, wherein the service logic link table comprising service chain identifications and corresponding service node arrangement sequences.

Also provided is a policy control device, comprising:
a search module configured to search for a corresponding service chain identification in a service chain mapping table according to a service chain condition feature of user equipment and generate a policy rule table and/or a service detection rule table of the user equipment, wherein the policy rule table and/or the service detection rule table comprises service chain identification operation information.

More preferably, the service chain condition features comprise service types, user levels, access types and wireless network states; and the search module is configured to:
when the user equipment accesses to a network, search for a corresponding service type in the service chain condition features of the service chain mapping table according to a user level, an access type and a wireless network state of the user equipment, and search for corresponding field information for judging the service type in a service identification template according to the searched service type;
if judging that the searched field information for judging the service type is one or a combination of a plurality of fields at layers 2-4, save a user identification in the policy rule table of the user, and save the searched service type and the field information for judging the service type in the service judgment template of the policy rule table of the user; and if judging that the searched field information for judging the service type is fields at layers 4-7, save the user identification in the service detection rule table of the user, and save the searched service type and the field information for judging the service type in the service judgment template of the service detection rule table of the user.

The embodiment of the present invention further provides a policy execution device, comprising:
a policy execution module configured to save a policy rule table; receive a message and search for a service type of the received message in a service judgment template of the policy rule table according to field information for judging the service type in the message; and insert a service chain identification in the received message according toan operation corresponding to the searched service type, and forward the message obtained after the insertion of the service chain identification to a switching device; and
a service detection module configured to save a service detection rule table.

More preferably, the policy execution module is further configured to, when the service type of the received message is not searched in the service judgment template in the policy rule table, forward the received message to the service detection module; and
the service detection module is further configured to receive the message from the policy execution module; search for the service type of the received message in the service judgment template of the service detection rule table; and insert a service chain identification in the received message according to an operation corresponding to the searched service type, and forward the message obtained after the insertion of the service chain identification to the switching device.

The embodiment of the present invention further provides a network management device, comprising:
an acquisition module configured to acquire address information of a service chain table node in a service logic link table; and acquire a switching device related to the service chain table node according to information of a network topology; and
a generation module configured to generate a service chain routing table corresponding to the switching device according to the service logic link table and send the service chain routing table to the switching device.

More preferably, the service chain routing table comprises input ports, service chain identifications and corresponding output ports.

Also provided is a service chain management method, comprising:
generating a service chain mapping table;
searching for a corresponding service chain identification in the service chain mapping table according to a service chain condition feature of user equipment and generating a policy rule table and/or a service detection rule table of the user equipment, wherein the policy rule table and/or the service detection rule table comprises service chain identification operation information; and
receiving a message and executing a policy rule and/or a service detection rule for the received message according to the policy rule table and/or the service detection rule table.

More preferably, the method further comprises:
arranging a service logic link table, wherein the service logic link table comprises service chain identifications and corresponding service node arrangement sequences;
generating a service chain routing table according to a network topology and the service logic link table; and
forwarding the message obtained after the execution of the policy rule and/or the service detection rule according to the service chain routing table.

More preferably, the policy rule table and/or the service detection rule further comprises a service judgment template.

More preferably, the service judgment template comprises service types and field information for judging the service types.

More preferably, the service chain identification operation information is used for instructing to add a service chain identification at a specific position in the message obtained after the execution of the policy rule and/or the service detection rule, the specific position is statically configured or is indicated in the service chain mapping table.

More preferably, searching for a corresponding service chain identification in the service chain mapping table according to a service chain condition feature of user equipment and generating a policy rule table and/or a service detection rule table of the user equipment comprises:
when the user equipment accesses to a network, searching for a corresponding service type in the service chain condition features of the service chain mapping table according to a user level, an access type and a wireless network state of the user equipment, searching for corresponding field information for judging the service type in the service identification template according to the searched service type, and if judging that the searched field information for judging the service type is one or a combination of a plurality of fields at layers 2-4, saving a user identification in the policy rule table of the user, and saving the searched service type and the field information for judging the service type in the service judgment template of the policy rule table of the user; and
if judging that the searched field information for judging the service type is fields at layers 4-7, saving the user identification in the service detection rule table of the user, and saving the searched service type and the field information for judging the service type in the service judgment template of the service detection rule table of the user,
wherein the service identification template is generated in advance or is statically configured; and the service identification template comprises the service types and the field information for judging the service types.

More preferably, receiving a message and executing a policy rule and/or a service detection rule for the received message according to the policy rule table and/or the service detection rule table comprises:
receiving a message, searching for a service type of the received message in the service judgment template in the policy rule table according to field information for judging the service type in the message, inserting a service chain identification in the received message according to an operation corresponding to the searched service type, and forwarding the message obtained after the insertion of the service chain identification to a switching device.

More preferably, when the service type of the received message is not searched in the service judgment template in the policy rule table, the method further comprises:
searching for the service type of the received message in the service judgment template in the service detection rule table, inserting the service chain identification in the received message according to an operation corresponding to the searched service type, and forwarding the message to the switching module.

More preferably, when the service type of the received data message is not searched in the service judgment template of the service detection rule table, the method further comprises:
exiting service chain processing.

More preferably, the service logic link table comprises service chain identifications and service node arrangement sequences corresponding to the service chain identifications; and
the service nodes consist of addresses of hosts or virtual machines, or addresses and instance identifications of the hosts or the virtual machines.

More preferably, generating a service chain routing table according to a network topology and the service logic link table comprises:
acquiring address information of a service chain table node in the service logic link table; acquiring a switching device related to the service chain table node according to information of the network topology; and generating a service chain routing table corresponding to the switching device according to the service logic link table and sending the service chain routing table to the switching device.

More preferably, the service chain routing table comprises input ports, service chain identifications and corresponding output ports.

Through the solutions provided by the embodiments of the present invention, dynamic configuration of service chains is realized, such that the dynamically-configured service chains are applicable to elastic quick service deployment change.

### Brief Description of Drawings

The drawings in the embodiments of the present invention will be described below. The drawings in the embodiments are used for further understanding the present invention, and are used together with the description for explaining the present invention and do not constitute limitations on the protection scope of the present invention.
FIG. 1(a) is a service chain mode 1 of a mobile value-added service network in the related art;
FIG. 2(b) is a service chain mode 2 of a mobile value-added service network in the related art;

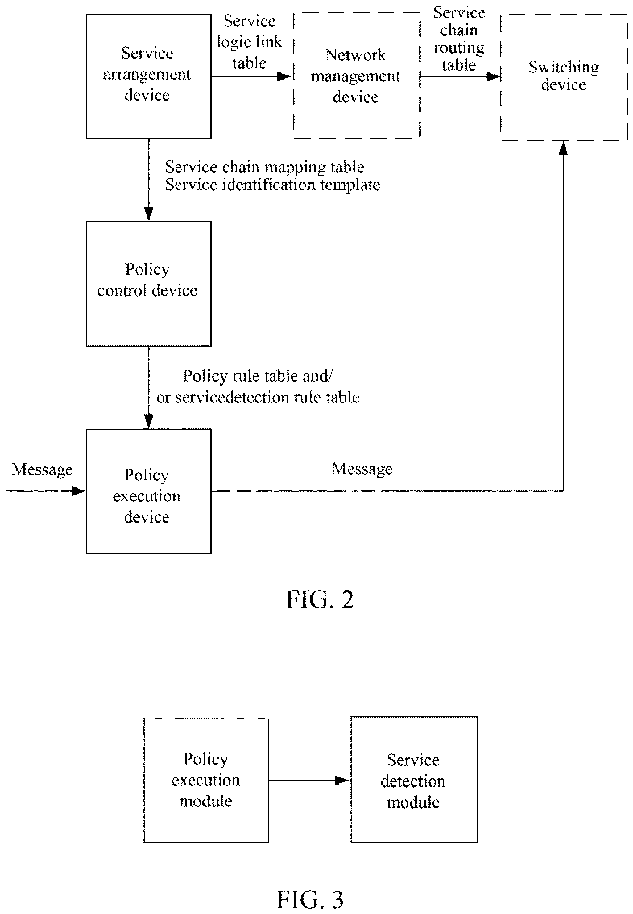

FIG. 2 is a schematic diagram of structural composition of a service chain management system provided by the embodiment of the present invention;
FIG. 3 is a schematic diagram of structural composition of a policy execution device provided by the embodiment of the present invention;

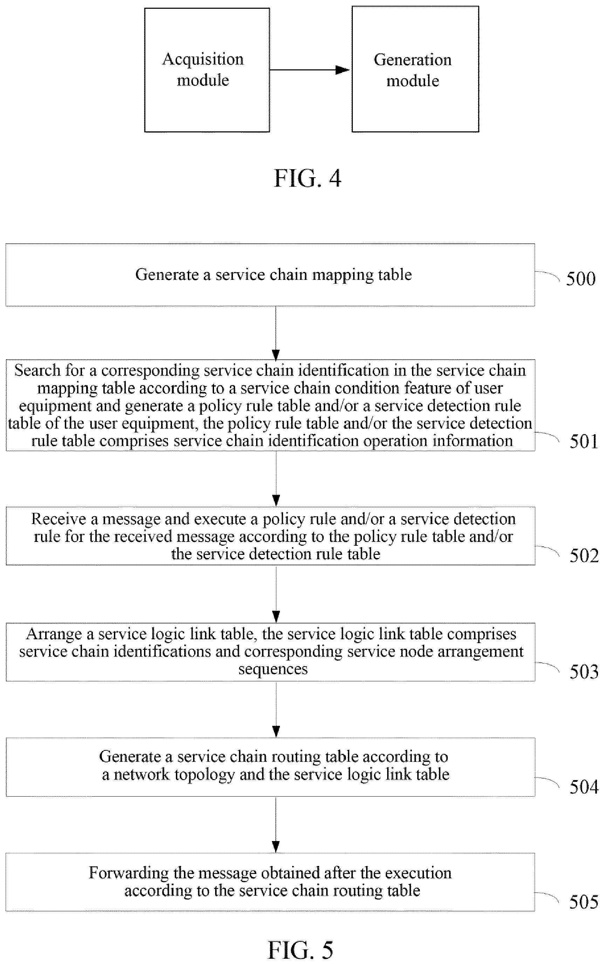

FIG. 4 is a schematic diagram of structural composition of a network management device provided by the embodiment of the present invention;
FIG. 5 is a flowchart of a service chain management method provided by the embodiment of the present invention.

### Preferred Embodiments of the Invention

The embodiments of the present invention will be described below in detail in combination with the drawings. It needs to be stated that the embodiments in the present application and the features in the embodiments can be freely combined in the case no conflict.

Referring to FIG. 2, the embodiment of the present invention provides a service chain management system, comprising:
a service arrangement device configured to generate a service chain mapping table and send the service chain mapping table to a policy control device, wherein the service chain mapping table comprises service chain identifications and corresponding service chain condition features;
the policy control device configured to search for a corresponding service chain identification in the service chain mapping table according to a service chain condition feature of user equipment and generate a policy rule table and/or a service detection rule table of the user equipment, wherein the policy rule table and/or the service detection rule table comprises service chain identification operation information; and
a policy execution device configured to receive a message and execute a policy rule and/or a service detection rule for the received message according to the policy rule table and/or the service detection rule table.

In the system provided by the embodiment of the present invention, the service arrangement device is further configured to arrange a service logic link table, the service logic link table comprises service chain identifications and corresponding service node arrangement sequences; and
the system further comprises:
a network management device configured to generate a service chain routing table according to a network topology and the service logic link table; and
a switching device configured to forward the message obtained after the execution of the policy rule and/or the service detection rule according to the service chain routing table.

In the system provided by the embodiment of the present invention, the policy rule table and/or the service detection rule further comprises a service judgment template.

Therein, the service judgment template comprises service types and field information for judging the service types.

In the system provided by the embodiment of the present invention, the service chain identification operation information is used for instructing the policy execution module to add a service chain identification at a specific position in the message obtained after execution of the policy rule and/or the service detection rule, the specific position isstatically configured by the policy control module or is indicated by the service arrangement module in the service chain mapping table.

In the system provided by the embodiment of the present invention, the service chain condition features comprise service types, user levels, access types and wireless network states; and the policy control device is configured to:
when the user equipment accesses to a network, search for a corresponding service type in the service chain condition features of the service chain mapping table according to a user level, an access type and a wireless network state of the user equipment, search for corresponding field information for judging the service type in the service identification template according to the searched service type, and if judging that the searched field information for judging the service type is one or a combination of a plurality of fields at layers 2-4, save a user identification in the policy rule table of the user, and save the searched service type and the field information for judging the service type in the service judgment template of the policy rule table of the user; and
if judging that the searched field information for judging the service type is fields at layers 4-7, save the user identification in the service detection rule table of the user, and save the searched service type and the field information for judging the service type in the service judgment template of the service detection rule table of the user,
wherein the service identification template is generated by the service arrangement device or is statically configured by the policy control device; and the service identification template comprises the service types and the field information for judging the service types.

In the system provided by the embodiment of the present invention, the policy execution device is configured to:
save the policy rule table and the service detection rule table; receive a message, search for a service type of the received message in the service judgment template in the policy rule table according to field information for judging the service type in the message, insert a service chain identification in the received message according to an operation corresponding to the searched service type, and forward the message obtained after the insertion of the service chain identification to the switching device.

In the system provided by the embodiment of the present invention, the policy execution device is further configured to:
when the service type of the received message is not searched in the service judgment template in the policy rule table, search for the service type of the received message in the service judgment template in the service detection rule table, insert the service chain identification in the received message according to an operation corresponding to the searched service type, and forward the message to the switching module.

In the system provided by the embodiment of the present invention, the policy execution device is further configured to:
when the service type of the received data message is not searched in the service judgment template of the service detection rule table, exit service chain processing.

In the system provided by the embodiment of the present invention, the service nodes consist of addresses of hosts or virtual machines, or addresses and instance identifications of the hosts or the virtual machines.

In the system provided by the embodiment of the present invention, the network management device is configured to:
acquire address information of the service chain table node in the service logic link table; acquire a switching device related to the service chain table node according to information of the network topology; and generate a service chain routing table corresponding to the switching device according to the service logic link table and send the service chain routing table to the switching device.

In the system provided by the embodiment of the present invention, the service chain routing table comprises input ports, service chain identifications and corresponding output ports.

The embodiment of the present invention further provides a service arrangement device, at least comprising:
a generation module configured to generate a service chain mapping table and send the service chain mapping table to a policy control device, wherein the service chain mapping table comprises service chain identifications and corresponding service chain condition features.

In the service arrangement device provided by the embodiment of the present invention, the generation module is further configured to arrange a service logic link table, wherein the service logic link table comprises service chain identifications and corresponding service node arrangement sequences.

The embodiment of the present invention further provides a policy control device, at least comprising:
a search module configured to search for a corresponding service chain identification in a service chain mapping table according to a service chain condition feature of user equipment and generate a policy rule table and/or a service detection rule table of the user equipment, wherein the policy rule table and/or the service detection rule table comprises service chain identification operation information.

In the policy control device provided by the embodiment of the present invention, the service chain condition features comprise service types, user levels, access types and wireless network states; and the search module is configured to:
when the user equipment accesses to a network, search for a corresponding service type in the service chain condition features of the service chain mapping table according to a user level, an access type and a wireless network state of the user equipment, and search for corresponding field information for judging the service type in a service identification template according to the searched service type;
if judging that the searched field information for judging the service type is one or a combination of a plurality of fields at layers 2-4, save a user identification in the policy rule table of the user, and save the searched service type and the field information for judging the service type in the service judgment template of the policy rule table of the user; and if judging that the searched field information for judging the service type is fields at layers 4-7, save the user identification in the service detection rule table of the user, and save the searched service type and the field information for judging the service type in the service judgment template of the service detection rule table of the user.

Referring to FIG. 3, the embodiment of the present invention further provides a policy execution device, at least comprising:
a policy execution module configured to save a policy rule table; receive a message and search for a service type of the received message in a service judgment template of the policy rule table according to field information for judging the service type in the message; and insert a service chain identification in the received message according to an operation corresponding to the searched service type, and forward the message obtained after the insertion of the service chain identification to a switching device; and
a service detection module configured to save a service detection rule table.

In the policy execution device provided by the embodiment of the present invention, the policy execution module is further configured to, when the service type of the received message is not searched in the service judgment template in the policy rule table, forward the received message to the service detection module; and
the service detection module is further configured to receive the message from the policy execution module; search for the service type of the received message in the service judgment template of the service detection rule table; and insert the service chain identification in the received message according to an operation corresponding to the searched service type, and forward the message obtained after the insertion of the service chain identification to the switching device.

Referring to FIG. 4, the embodiment of the present invention further provides a network management device, comprising:
an acquisition module configured to acquire address information of a service chain table node in a service logic link table; and acquire a switching device related to the service chain table node according to information of a network topology; and
a generation module configured to generate a service chain routing table corresponding to the switching device according to the service logic link table and send the service chain routing table to the switching device.

In the network management device provided by the embodiment of the present invention, the service chain routing table comprises input ports, service chain identifications and corresponding output ports.

Referring to FIG. 5, the embodiment of the present invention further provides a service chain management method, comprising:
At Step 500,it is to generate a service chain mapping table.

In this step, how to generate the service chain mapping table belongs to the prior art and cannot be used for limiting the protection range of the present invention.

In this step, as shown in FIG. 1, the service chain mapping table comprises service chain identifications and corresponding service chain condition features, and the service chain condition features comprise service types, user levels, access types, wireless network states and data stream directions corresponding to the service chain identifications.

**Table 1**

| Service chain identification | Service chain condition feature | | | | |
|---|---|---|---|---|---|
| | Service type | User level | Access type | Wireless network state | Data stream direction |
| Service chain 1 | WAP (Wireless Application Protocol) | High | 3G | Congestion | Up (from user to value-added network) |
| Service chain 2 | WAP | Lower | 2G | Non-congestion | Down (from value-added network to user) |
| Service chain 3 | P2P (Peer to Peer) | All | All | Non-congestion | Down |
| Service chain 4 | Internet | High | 2G | Congestion | Up |

Therein, the service chain identifications can consist of, but not limited to, Virtual Local Area Network(VLAN) identifications and Multi-Protocol Label Switching(MPLS) identifications. The specific composition of the service chain identifications is not limited in the present invention, as long as each service chain in a network can be distinguished. Specific composition thereof should not be used for limiting the protection range of the present invention.

The service type can be Wireless Application Protocol(WAP), Peer to Peer(P2P), Internet or the like.

The user level can be High, Lower or All (no priority).

The access type can be 2G, 3G or All (others).

The wireless network state can be congestion or non-congestion.

The data stream direction can be Up (from user to value-added network) or Down (from value-added network to user).

At Step 501,it is to search for a corresponding service chain identification in the service chain mapping table according to a service chain condition feature of user equipment and generate a policy rule table and/or a service detection rule table of the user equipment, the policy rule table and/or the service detection rule table comprises service chain identification operation information.

In this step, the service chain identification operation information can be the insertion of a service chain identification at a specific position of a message, and the specific position of the message can be statically configured and can also be indicated by an indication carried in the service chain mapping table.

Therein, the service chain identification corresponds to the service type. For example, if the service type is Internet, the service chain identification inserted at the specific position of the message is a service chain identification corresponding to Internet.

In this step, as shown in FIG. 2, the policy rule table or the service detection rule table further comprises a service identification template.

**Table 2**

| User identification (IMSI) | Service judgment template (TFT) | Service chain identification operation information |
|---|---|---|
| 46002000000001 | 5-tuple (source/destination address) | Insertion of service chain identification |

In Table 2, the user identification can be an International Mobile Subscriber Identification Number(IMSI).

As shown in Table 3, the service identification/judgment template comprises service types and field information for judging the service types.

**Table 3**

| Service type | Field at layer 2 MAC, VLAN, MPLS, etc. | Field at layer 3 IP address | Field at layer 4 TCP/UDP port | Fields at layers 4-7 | | |
|---|---|---|---|---|---|---|
| | | | | Field pointer offset | Field length | Field value |
| WAP | XX | XX | XX | Xx | Xx | Xx |
| Internet | | | | | | |
| P2P | | | | | | |

In Table 3, the service type can be WAP, P2P, Internet or the like.

The field information for judging the service type can be one or a combination of a plurality of the following fields: field at layer 2, field at layer 3, field at layer 4 and fields at layers 4-7, wherein
the field at layer 2 can be a Media Access Control(MAC) address, a Multi-Protocol Label Switching(MPLS) identification or a Virtual Local Area Network(VLAN) identification; the field at layer 3 can be an Internet Protocol(IP) address; the field at layer 4 can be a Transmission Control Protocol(TCP)/User Datagram Protocol(UDP) port; and the fields at layers 4-7 can consist of a field pointer offset, a field length and a field value.

In this step, when the user equipment accesses to a network, a corresponding service type is searched in the service chain condition features of the service chain mapping table according to a user level, an access type and a wireless network state of the user equipment, corresponding field information for judging the service type is searched in a service identification template according to the searched service type, and if judging that the searched field information for judging the service type is one or a combination of a plurality of fields at layers 2-4, a user identification is saved in the policy rule table of the user, and the searched service type and the field information for judging the service type are saved in the service judgment template of the policy rule table of the user; and
if judging that the searched field information for judging the service type is fields at layers 4-7, the user identification is saved in the service detection rule table of the user, and the searched service type and the field information for judging the service type are saved in the service judgment template of the service detection rule table of the user.

At Step 502,it is to receive a message and execute a policy rule and/or a service detection rule for the received message according to the policy rule table and/or the service detection rule table.

In this step, after the policy execution device receives a message, a service type of the received message in a service judgment template of the policy rule table is searched according to field information for judging the service type in the message, a service chain identification is inserted in the received message according to an operation corresponding to the searched service type, and the message obtained after the insertion of the service chain identification is forwarded to a switching device.

When the service type of the received message is not searched in the service judgment template in the policy rule table, the service type of the received data message is searched in the service judgment template in the service detection rule table, the service chain identification is inserted in the received message according to an operation corresponding to the searched service type, and the message is forwarded to the switching module.

When the service type of the received data message is not searched in the service judgment template of the service detection rule table, service chain processing is exited.

Therein, the service types correspond to different service chain identifications, and the service chain identification corresponding to the service type is inserted in the message according to the service type.

In the method provided by the embodiment of the present invention, the method further comprises:
At Step 503,it is to arrange a service logic link table, the service logic link table comprises service chain identifications and corresponding service node arrangement sequences.

In this step, as shown in Table 4, the service logic link table comprises service chain identifications and corresponding service node arrangement sequences.

**Table 4**

| Service chain identification | Service node arrangement sequence |
|---|---|
| Service chain 1 | Service node 1 -> service node 2 -> service node 3 -> service node 4 |
| Service chain 2 | Service node 1 -> service node 3 |
| Service chain 3 | Service node 2 -> service node 1 -> service node 3 |
| ... | |

In table 4, the service node arrangement sequence service node 1 -> service node 2 -> service node 3 -> service node 4 denotes that the message sequentially passes through service nodes 1-4.

The service node arrangement sequence therein further comprises description information of service nodes, e.g., address information of service nodes, and the address information can be address information (such as IP addresses) of hosts (or virtual machines) in which the service nodes are located, or consists of address information (such as IP addresses) of hosts (or virtual machines) in which the service nodes are located and instance identifications.

In this step, the service identification template can be generated. How to specifically generate the service identification template belongs to the prior art and cannot be used for limiting the protection range of the present invention.

At Step 504,it is to generate a service chain routing table according to a network topology and the service logic link table.

In this step, address information of the service chain table node is acquired in the service logic link table; a switching device related to the service chain table node is acquired according to information of the network topology; and a service chain routing table corresponding to the switching device is generated according to the service logic link table and the service chain routing table is issued to the switching device.

In this step, as shown in Table 5, the service chain routing table comprises input ports, service chain identifications and output ports, and can further comprise sequences.

**Table 5**

| Input port | Service chain identification | Sequence | Output port |
|---|---|---|---|
| 1 | Service chain 1 | 1 | 8 |
| 8 | Service chain 1 | 2 | n |
| 1 | Service chain 2 | 1 | 3 |
| 3 | Service chain 2 | 2 | 7 |
| 7 | Service chain 3 | 3 | 9 |

The input ports refer to physical or logical ports, for receiving messages, of switches/routers;

The Service Chain(SC) identifications are used for matching with SC identification fields in the received messages to indicate the output ports for switching/routing of the data messages.

The output ports refer to output physical or logical ports, for forwarding the data messages, of switches/routers.

The sequences refer to arrangement sequences of output ports of a plurality of service nodes when the same SC identification is correspondingly connected with the plurality of service nodes in one switch/router.

At Step 505,it is to forward the message obtained after the execution of the policy rule and/or the service detection rule according to the service chain routing table.

It needs to be stated that the above-mentioned embodiments are just used for facilitating the understanding by one skilled in the art instead of limiting the protection range of the present invention. Any obvious replacement, improvement and the like made by one skilled in the art to the present invention without departing from the invention concept of the present invention shall be also included in the protection range of the present invention.

One skilled in the art should understand that all components of the devices and/or system and all steps in the method provided by the embodiments of the present invention can be implemented by adopting general computing devices, can be integrated on a single computing device, can also be distributed in a network consisting of a plurality of computing devices, optionally can also be implemented program codesexecutable by computing devices, thus can be stored in storage devices and can be executed by the computing devise, or can be respectively fabricated into integrated circuit modules, or a plurality of modules or steps thereof can be fabricated into a single integrated circuit module for implementation. Therefore, the present invention is not limited to any specific combination of hardware and software.

### Industrial Applicability

Through the solutions provided by the embodiments of the present invention, dynamic configuration of service chains is realized, such that the dynamically configured service chains are applicable to elastic quick service deployment change.

## Claims

1. A service chain management system, comprising a service arrangement device, a policy control device and a policy execution device, wherein:
the service arrangement device is configured to generate a service chain mapping table (500) and send the service chain mapping table to the policy control device, the service chain mapping table comprises service chain identifications and corresponding service chain condition features; **characterized in that**,
the policy control device is configured to search for a corresponding service chain identification in the service chain mapping table according to a service chain condition feature of user equipment and generate a policy rule table and/or a service detection rule table of the user equipment, the policy rule table and/or the service detection rule table comprises service chain identification operation information (501); wherein the service chain identification corresponds to a service type; wherein the policy rule table and/or the service detection rule further comprises a service judgment template, and the service judgment template comprises service types and field information for judging the service types; and
the policy execution device is configured to receive a message and execute a policy rule and/or a service detection rule for the received message according to the policy rule table and/or the service detection rule table.

2. The system according to claim 1, wherein the service arrangement device is further configured to arrange a service logic link table, the service logic link table comprises service chain identifications and corresponding service node arrangement sequences;
the system further comprises a network management device and a switching device;
the policy execution device is further configured to forward the message obtained after the execution of the policy rule and/or service detection rule to the switching device;
the network management device is configured to generate a service chain routing table according to a network topology and the service logic link table; and
the switching device is configured to forward the message obtained after the execution of the policy rule and/or the service detection rule according to the service chain routing table.

3. The system according to according to any one of claims 1-2, wherein the service chain identification operation information is used for instructing the policy execution module to add a service chain identification at a specific position in the message obtained after the execution of the policy rule and/or the service detection rule, the specific position is statically configured by the policy control module or is indicated by the service arrangement module in the service chain mapping table.

4. The system according to claim 1, wherein the service chain condition features comprise service types, user levels, access types and wireless network states; and the policy control device is configured to:
when the user equipment accesses to a network, search for a corresponding service type in the service chain condition features of the service chain mapping table according to a user level, an access type and a wireless network state of the user equipment, search for corresponding field information for judging the service type in the service identification template according to the searched service type, and if judging that the searched field information for judging the service type is one or a combination of a plurality of fields at layers 2-4, save a user identification in the policy rule table of the user, and save the searched service type and the field information for judging the service type in the service judgment template of the policy rule table of the user; and
if judging that the searched field information for judging the service type is fields at layers 4-7, save the user identification in the service detection rule table of the user, and save the searched service type and the field information for judging the service type in the service judgment template of the service detection rule table of the user,
wherein the service identification template is generated by the service arrangement device or is statically configured by the policy control device; and the service identification template comprises the service types and the field information for judging the service types,
and,
wherein the policy execution device is configured to:
save the policy rule table and the service detection rule table; receive a message, search for a service type of the received message in the service judgment template in the policy rule table according to field information for judging the service type in the message, insert a service chain identification in the received message according to an operation corresponding to the searched service type, and forward the message obtained after the insertion of the service chain identification to the switching device.

5. The system according to claim 4, wherein the policy execution device is further configured to:
when the service type of the received message is not searched in the service judgment template in the policy rule table, search for the service type of the received message in the service judgment template in the service detection rule table, insert the service chain identification in the received message according to an operation corresponding to the searched service type, and forward the message to the switching device,
or,
wherein the policy execution device is further configured to:
when the service type of the received data message is not searched in the service judgment template of the service detection rule table, exit service chain processing.

6. The system according to claim 2, wherein the service nodes consist of addresses of hosts or virtual machines, or addresses and instance identifications of the hosts or the virtual machines,
and,
wherein the network management device is configured to:
acquire address information of a service chain table node in the service logic link table;
acquire a switching device related to the service chain table node according to information of the network topology; and generate a service chain routing table corresponding to the switching device according to the service logic link table and send the service chain routing table to the switching device,
and,
wherein the service chain routing table comprises input ports, service chain identifications and corresponding output ports.

7. A policy control device, comprising a search module configured to search for a corresponding service chain identification in a service chain mapping table according to a service chain condition feature of user equipment and generate a policy rule table and/or a service detection rule table of the user equipment, wherein the policy rule table and/or the service detection rule table comprises service chain identification operation information; wherein the service chain identification corresponds to a service type; wherein the policy rule table and/or the service detection rule further comprises a service judgment template, and the service judgment template comprises service types and field information for judging the service types.

8. The policy control device according to claim 7, wherein the service chain condition features comprise service types, user levels, access types and wireless network states; and the search module is configured to:
when the user equipment accesses to a network, search for a corresponding service type in the service chain condition features of the service chain mapping table according to a user level, an access type and a wireless network state of the user equipment, and search for corresponding field information for judging the service type in a service identification template according to the searched service type;
if judging that the searched field information for judging the service type is one or a combination of a plurality of fields at layers 2-4, save a user identification in the policy rule table of the user, and save the searched service type and the field information for judging the service type in the service judgment template of the policy rule table of the user; and if judging that the searched field information for judging the service type is fields at layers 4-7, save the user identification in the service detection rule table of the user, and save the searched service type and the field information for judging the service type in the service judgment template of the service detection rule table of the user.

9. A service chain management method, comprising:
generating a service chain mapping table (500); **characterized in that**,
searching for a corresponding service chain identification in the service chain mapping table according to a service chain condition feature of user equipment and generating a policy rule table and/or a service detection rule table of the user equipment, wherein the policy rule table and/or the service detection rule table comprises service chain identification operation information (501); wherein the service chain identification corresponds to a service type; wherein the policy rule table and/or the service detection rule further comprises a service judgment template, and the service judgment template comprises service types and field information for judging the service types; and
receiving a message and executing a policy rule and/or a service detection rule for the received message according to the policy rule table and/or the service detection rule table (502).

10. The method according to claim 9, wherein the method further comprises:
arranging a service logic link table, wherein the service logic link table comprises service chain identifications and corresponding service node arrangement sequences (503);
generating a service chain routing table according to a network topology and the service logic link table (504); and
forwarding the message obtained after the execution of the policy rule and/or the service detection rule according to the service chain routing table (505).

11. The method according to any one of claims 9-10, wherein the service chain identification operation information is used for instructing to add a service chain identification at a specific position in the message obtained after the execution of the policy rule and/or the service detection rule, the specific position is statically configured or is indicated in the service chain mapping table.

12. The method according to claim 9, wherein said searching for a corresponding service chain identification in the service chain mapping table according to a service chain condition feature of user equipment and generating a policy rule table and/or a service detection rule table of the user equipment comprises:
when the user equipment accesses to a network, searching for a corresponding service type in the service chain condition features of the service chain mapping table according to a user level, an access type and a wireless network state of the user equipment, searching for corresponding field information for judging the service type in the service identification template according to the searched service type, and if judging that the searched field information for judging the service type is one or a combination of a plurality of fields at layers 2-4, saving a user identification in the policy rule table of the user, and saving the searched service type and the field information for judging the service type in the service judgment template of the policy rule table of the user; and
if judging that the searched field information for judging the service type is fields at layers 4-7, saving the user identification in the service detection rule table of the user, and saving the searched service type and the field information for judging the service type in the service judgment template of the service detection rule table of the user,
wherein the service identification template is generated in advance or is statically configured; and the service identification template comprises the service types and the field information for judging the service types,
and,
wherein said receiving a message and executing a policy rule and/or a service detection rule for the received message according to the policy rule table and/or the service detection rule table comprises:
receiving a message, searching for a service type of the received message in the service judgment template in the policy rule table according to field information for judging the service type in the message, inserting a service chain identification in the received message according to an operation corresponding to the searched service type, and forwarding the message obtained after the insertion of the service chain identification to a switching device.

13. The method according to claim 12, wherein, when the service type of the received message is not searched in the service judgment template in the policy rule table, the method further comprises:
searching for the service type of the received message in the service judgment template in the service detection rule table, inserting the service chain identification in the received message according to an operation corresponding to the searched service type, and forwarding the message to the switching module,
or,
wherein, when the service type of the received data message is not searched in the service judgment template of the service detection rule table, the method further comprises:
exiting service chain processing.

14. The method according to claim 10, wherein the service logic link table comprises service chain identifications and service node arrangement sequences corresponding to the service chain identifications; and
the service nodes consist of addresses of hosts or virtual machines, or addresses and instance identifications of the hosts or the virtual machines,
and,
wherein said generating a service chain routing table according to a network topology and the service logic link table comprises:
acquiring address information of a service chain table node in the service logic link table; acquiring a switching device related to the service chain table node according to information of the network topology; and generating a service chain routing table corresponding to the switching device according to the service logic link table and sending the service chain routing table to the switching device,
and,
wherein the service chain routing table comprises input ports, service chain identifications and corresponding output ports.

## Patentansprüche

1. Dienstkettenverwaltungssystem, umfassend eine Diensteinrichtungsvorrichtung, eine Richtliniensteuervorrichtung und eine Richtlinienausführungsvorrichtung, wobei:
die Diensteinrichtungsvorrichtung dazu ausgelegt ist, eine Dienstkettenabbildungstabelle (500) zu erzeugen und die Dienstkettenabbildungstabelle zur Richtliniensteuervorrichtung zu senden, wobei die Dienstkettenabbildungstabelle Dienstkettenidentifikationen und entsprechende Dienstkettenzustandsmerkmale umfasst; **dadurch gekennzeichnet, dass** die Richtliniensteuervorrichtung dazu ausgelegt ist, nach einer entsprechenden Dienstkettenidentifikation in der Dienstkettenabbildungstabelle gemäß einem Dienstkettenzustandsmerkmal eines Benutzergeräts zu suchen und eine Richtlinienregeltabelle und/oder eine Dienstdetektionsregeltabelle des Benutzergeräts zu erzeugen, wobei die Richtlinienregeltabelle und/oder die Dienstdetektionsregeltabelle Dienstkettenidentifikation-Operationsinformationen umfasst bzw. umfassen (501); wobei die Dienstkettenidentifikation einem Diensttyp entspricht; wobei die Richtlinienregeltabelle und/oder die Dienstdetektionsregel eine Dienstbeurteilungsvorlage umfasst bzw. umfassen und die Dienstbeurteilungsvorlage Diensttypen und Feldinformationen zum Beurteilen der Diensttypen umfasst; und
die Richtlinienausführungsvorrichtung dazu ausgelegt ist, eine Nachricht zu empfangen und eine Richtlinienregel und/oder eine Dienstdetektionsregel für die empfangene Nachricht gemäß der Richtlinienregeltabelle und/oder der Dienstdetektionsregeltabelle auszuführen.

2. System nach Anspruch 1, wobei die Diensteinrichtungsvorrichtung ferner dazu ausgelegt ist, eine Dienstlogikverknüpfungstabelle einzurichten, wobei die Dienstlogikverknüpfungstabelle Dienstkettenidentifikationen und entsprechende Dienstknoteneinrichtungssequenzen umfasst;
das System ferner eine Netzwerkverwaltungsvorrichtung und eine Vermittlungsvorrichtung umfasst;
die Richtlinienausführungsvorrichtung ferner dazu ausgelegt ist, die Nachricht, die nach der Ausführung der Richtlinienregel und/oder Dienstdetektionsregel erhalten wird, zur Vermittlungsvorrichtung weiterzuleiten;
die Netzwerkverwaltungsvorrichtung dazu ausgelegt ist, eine Dienstketten-Routing-Tabelle gemäß einer Netzwerktopologie und der Dienstlogikverknüpfungstabelle zu erzeugen; und
die Vermittlungsvorrichtung dazu ausgelegt ist, die Nachricht, die nach der Ausführung der Richtlinienregel und/oder der Dienstdetektionsregel erhalten wird, gemäß der Dienstketten-Routing-Tabelle weiterzuleiten.

3. System nach einem der Ansprüche 1-2, wobei die Dienstkettenidentifikation-Operationsinformationen dazu verwendet werden, das Richtlinienausführungsmodul anzuweisen, eine Dienstkettenidentifikation an einer spezifischen Position in der Nachricht, die nach der Ausführung der Richtlinienregel und/oder der Dienstdetektionsregel erhalten wird, hinzuzufügen, wobei die spezifische Position durch das Richtliniensteuermodul statisch konfiguriert wird oder durch das Diensteinrichtungsmodul in der Dienstkettenabbildungstabelle angegeben wird.

4. System nach Anspruch 1, wobei die Dienstkettenzustandsmerkmale Diensttypen, Benutzerebenen, Zugangstypen und Drahtlosnetzwerkzustände umfassen und die Richtliniensteuervorrichtung zu Folgendem ausgelegt ist:
wenn das Benutzergerät auf ein Netzwerk zugreift, Suchen nach einem entsprechenden Diensttyp in den Dienstkettenzustandsmerkmalen der Dienstkettenabbildungstabelle gemäß einer Benutzerebene, einem Zugangstyp und einem Drahtlosnetzwerkstatus des Benutzergeräts, Suchen nach entsprechenden Feldinformationen zum Beurteilen des Diensttyps in der Dienstidentifikationsvorlage gemäß dem gesuchten Diensttyp und falls beurteilt wird, dass die gesuchten Feldinformationen zum Beurteilen des Diensttyps ein Feld oder eine Kombination mehrerer Felder an den Schichten 2-4 sind, Abspeichern einer Benutzeridentifikation in der Richtlinienregeltabelle des Benutzers und Abspeichern des gesuchten Diensttyps und der Feldinformationen zum Beurteilen des Diensttyps in der Dienstbeurteilungsvorlage der Richtlinienregeltabelle des Benutzers; und
falls beurteilt wird, dass die gesuchten Feldinformationen zum Beurteilen des Diensttyps Felder an den Schichten 4-7 sind, Abspeichern der Benutzeridentifikation in der Dienstdetektionsregeltabelle des Benutzers und Abspeichern des gesuchten Diensttyps und der Feldinformationen zum Beurteilen des Diensttyps in der Dienstbeurteilungsvorlage der Dienstdetektionsregeltabelle des Benutzers,
wobei die Dienstidentifikationsvorlage durch die Diensteinrichtungsvorrichtung erzeugt wird oder statisch durch die Richtliniensteuervorrichtung konfiguriert wird; und die Dienstidentifikationsvorlage die Diensttypen und die Feldinformationen zum Beurteilen der Diensttypen umfasst, und
wobei die Richtlinienausführungsvorrichtung zu Folgendem ausgelegt ist:
Abspeichern der Richtlinienregeltabelle und der Dienstdetektionsregeltabelle; Empfangen einer Nachricht, Suchen nach einem Diensttyp der empfangenen Nachricht in der Dienstbeurteilungsvorlage in der Richtlinienregeltabelle gemäß Feldinformationen zum Beurteilen des Diensttyps in der Nachricht, Einfügen einer Dienstkettenidentifikation in die empfangene Nachricht gemäß einer Operation, die dem gesuchten Diensttyp entspricht, und Weiterleiten der Nachricht, die nach dem Einfügen der Dienstkettenidentifikation erhalten wird, zur Vermittlungsvorrichtung.

5. System nach Anspruch 4, wobei die Richtlinienausführungsvorrichtung ferner zu Folgendem ausgelegt ist:
wenn der Diensttyp der empfangenen Nachricht nicht in der Dienstbeurteilungsvorlage in der Richtlinienregeltabelle gesucht wird, Suchen nach dem Diensttyp der empfangenen Nachricht in der Dienstbeurteilungsvorlage in der Dienstdetektionsregeltabelle, Einfügen der Dienstkettenidentifikation in die empfangene Nachricht gemäß einer Operation, die dem gesuchten Diensttyp entspricht, und Weiterleiten der Nachricht zur Vermittlungsvorrichtung,
oder
wobei die Richtlinienausführungsvorrichtung ferner zu Folgendem ausgelegt ist:
wenn der Diensttyp der empfangenen Datennachricht nicht in der Dienstbeurteilungsvorlage der Dienstdetektionsregeltabelle gesucht wird, Austreten aus der Dienstkettenverarbeitung.

6. System nach Anspruch 2, wobei die Dienstknoten aus Adressen von Hosts oder virtuellen Maschinen oder Adressen und Instanzenidentifikationen der Hosts oder der virtuellen Maschinen bestehen,
und
wobei die Netzwerkverwaltungsvorrichtung zu Folgendem ausgelegt ist:
Erfassen von Adressinformationen eines Dienstkettentabellenknotens in der Dienstlogikverknüpfungstabelle; Erfassen einer Vermittlungsvorrichtung bezüglich des Dienstkettentabellenknotens gemäß Informationen der Netzwerktopologie; und Erzeugen einer Dienstketten-Routing-Tabelle, die der Vermittlungsvorrichtung entspricht, gemäß der Dienstlogikverknüpfungstabelle und Senden der Dienstketten-Routing-Tabelle zur Vermittlungsvorrichtung,
und
wobei die Dienstketten-Routing-Tabelle Eingangsanschlüsse, Dienstkettenidentifikationen und entsprechende Ausgangsanschlüsse umfasst.

7. Richtliniensteuervorrichtung, umfassend
ein Suchmodul, das dazu ausgelegt ist, nach einer entsprechenden Dienstkettenidentifikation in einer Dienstkettenabbildungstabelle gemäß einem Dienstkettenzustandsmerkmal eines Benutzergeräts zu suchen und eine Richtlinienregeltabelle und/oder eine Dienstdetektionsregeltabelle des Benutzergeräts zu erzeugen, wobei die Richtlinienregeltabelle und/oder die Dienstdetektionsregeltabelle Dienstkettenidentifikation-Operationsinformationen umfasst bzw. umfassen; wobei die Dienstkettenidentifikation einem Diensttyp entspricht; wobei die Richtlinienregeltabelle und/oder die Dienstdetektionsregel ferner eine Dienstbeurteilungsvorlage umfasst bzw. umfassen und die Dienstbeurteilungsvorlage Diensttypen und Feldinformationen zum Beurteilen der Diensttypen umfasst.

8. Richtliniensteuervorrichtung nach Anspruch 7, wobei die Dienstkettenzustandsmerkmale Diensttypen, Benutzerebenen, Zugangstypen und Drahtlosnetzwerkzustände umfassen und das Suchmodul zu Folgendem ausgelegt ist:
wenn das Benutzergerät auf ein Netzwerk zugreift, Suchen nach einem entsprechenden Diensttyp in den Dienstkettenzustandsmerkmalen der Dienstkettenabbildungstabelle gemäß einer Benutzerebene, einem Zugangstyp und einem Drahtlosnetzwerkstatus des Benutzergeräts und Suchen nach entsprechenden Feldinformationen zum Beurteilen des Diensttyps in einer Dienstidentifikationsvorlage gemäß dem gesuchten Diensttyp;
falls beurteilt wird, dass die gesuchten Feldinformationen zum Beurteilen des Diensttyps ein Feld oder eine Kombination mehrerer Felder an den Schichten 2-4 sind, Abspeichern einer Benutzeridentifikation in der Richtlinienregeltabelle des Benutzers und Abspeichern des gesuchten Diensttyps und der Feldinformationen zum Beurteilen des Diensttyps in der Dienstbeurteilungsvorlage der Richtlinienregeltabelle des Benutzers; und falls beurteilt wird, dass die gesuchten Feldinformationen zum Beurteilen des Diensttyps Felder an den Schichten 4-7 sind, Abspeichern der Benutzeridentifikation in der Dienstdetektionsregeltabelle des Benutzers und Abspeichern des gesuchten Diensttyps und der Feldinformationen zum Beurteilen des Diensttyps in der Dienstbeurteilungsvorlage der Dienstdetektionsregeltabelle des Benutzers.

9. Dienstkettenverwaltungsverfahren, umfassend:
Erzeugen einer Dienstkettenabbildungstabelle (500); **gekennzeichnet durch**
Suchen nach einer entsprechenden Dienstkettenidentifikation in der Dienstkettenabbildungstabelle gemäß einem Dienstkettenzustandsmerkmal eines Benutzergeräts und Erzeugen einer Richtlinienregeltabelle und/oder einer Dienstdetektionsregeltabelle des Benutzergeräts, wobei die Richtlinienregeltabelle und/oder die Dienstdetektionsregeltabelle Dienstkettenidentifikation-Operationsinformationen umfasst bzw. umfassen (501); wobei die Dienstkettenidentifikation einem Diensttyp entspricht; wobei die Richtlinienregeltabelle und/oder die Dienstdetektionsregel ferner eine Dienstbeurteilungsvorlage umfasst bzw. umfassen und die Dienstbeurteilungsvorlage Diensttypen und Feldinformationen zum Beurteilen der Diensttypen umfasst; und
Empfangen einer Nachricht und Ausführen einer Richtlinienregel und/oder einer Dienstdetektionsregel für die empfangene Nachricht gemäß der Richtlinienregeltabelle und/oder der Dienstdetektionsregeltabelle (502).

10. Verfahren nach Anspruch 9, wobei das Verfahren ferner Folgendes umfasst:
Einrichten einer Dienstlogikverknüpfungstabelle, wobei die Dienstlogikverknüpfungstabelle Dienstkettenidentifikationen und entsprechende Dienstknoteneinrichtungssequenzen umfasst (503);
Erzeugen einer Dienstketten-Routing-Tabelle gemäß einer Netzwerktopologie und der Dienstlogikverknüpfungstabelle (504); und
Weiterleiten der Nachricht, die nach der Ausführung der Richtlinienregel und/oder der Dienstdetektionsregel erhalten wird, gemäß der Dienstketten-Routing-Tabelle (505).

11. Verfahren nach einem der Ansprüche 9-10, wobei die Dienstkettenidentifikation-Operationsinformationen dazu verwendet werden, anzuweisen, eine Dienstkettenidentifikation an einer spezifischen Position in der Nachricht, die nach der Ausführung der Richtlinienregel und/oder der Dienstdetektionsregel erhalten wird, hinzuzufügen, wobei die spezifische Position statisch konfiguriert wird oder in der Dienstkettenabbildungstabelle angegeben wird.

12. Verfahren nach Anspruch 9, wobei das Suchen nach einer entsprechenden Dienstkettenidentifikation in der Dienstkettenabbildungstabelle gemäß einem Dienstkettenzustandsmerkmal eines Benutzergeräts und das Erzeugen einer Richtlinienregeltabelle und/oder einer Dienstdetektionsregeltabelle des Benutzergeräts Folgendes umfasst:
wenn das Benutzergerät auf ein Netzwerk zugreift, Suchen nach einem entsprechenden Diensttyp in den Dienstkettenzustandsmerkmalen der Dienstkettenabbildungstabelle gemäß einer Benutzerebene, einem Zugangstyp und einem Drahtlosnetzwerkstatus des Benutzergeräts, Suchen nach entsprechenden Feldinformationen zum Beurteilen des Diensttyps in der Dienstidentifikationsvorlage gemäß dem gesuchten Diensttyp, und falls beurteilt wird, dass die gesuchten Feldinformationen zum Beurteilen des Diensttyps ein Feld oder eine Kombination mehrerer Felder an den Schichten 2-4 sind, Abspeichern einer Benutzeridentifikation in der Richtlinienregeltabelle des Benutzers und Abspeichern des gesuchten Diensttyps und der Feldinformationen zum Beurteilen des Diensttyps in der Dienstbeurteilungsvorlage der Richtlinienregeltabelle des Benutzers; und
falls beurteilt wird, dass die gesuchten Feldinformationen zum Beurteilen des Diensttyps Felder an den Schichten 4-7 sind, Abspeichern der Benutzeridentifikation in der Dienstdetektionsregeltabelle des Benutzers und Abspeichern des gesuchten Diensttyps und der Feldinformationen zum Beurteilen des Diensttyps in der Dienstbeurteilungsvorlage der Dienstdetektionsregeltabelle des Benutzers,
wobei die Dienstidentifikationsvorlage im Voraus erzeugt wird oder statisch konfiguriert wird und die Dienstidentifikationsvorlage die Diensttypen und die Feldinformationen zum Beurteilen der Diensttypen umfasst, und
wobei das Empfangen einer Nachricht und das Ausführen einer Richtlinienregel und/oder einer Dienstdetektionsregel für die empfangene Nachricht gemäß der Richtlinienregeltabelle und/oder der Dienstdetektionsregeltabelle Folgendes umfasst:
Empfangen einer Nachricht, Suchen nach einem Diensttyp der empfangenen Nachricht in der Dienstbeurteilungsvorlage in der Richtlinienregeltabelle gemäß Feldinformationen zum Beurteilen des Diensttyps in der Nachricht, Einfügen einer Dienstkettenidentifikation in die empfangene Nachricht gemäß einer Operation, die dem gesuchten Diensttyp entspricht, und Weiterleiten der Nachricht, die nach der Einfügung der Dienstkettenidentifikation erhalten wird, zu einer Vermittlungsvorrichtung.

13. Verfahren nach Anspruch 12, wobei, wenn der Diensttyp der empfangenen Nachricht nicht in der Dienstbeurteilungsvorlage in der Richtlinienregeltabelle gesucht wird, das Verfahren ferner Folgendes umfasst:
Suchen nach dem Diensttyp der empfangenen Nachricht in der Dienstbeurteilungsvorlage in der Dienstdetektionsregeltabelle, Einfügen der Dienstkettenidentifikation in der empfangenen Nachricht gemäß einer Operation, die dem gesuchten Diensttyp entspricht, und Weiterleiten der Nachricht zum Vermittlungsmodul,
oder
wobei, wenn der Diensttyp der empfangenen Datennachricht nicht in der Dienstbeurteilungsvorlage der Dienstdetektionsregeltabelle gesucht wird, das Verfahren ferner Folgendes umfasst:
Austreten aus der Dienstkettenverarbeitung.

14. Verfahren nach Anspruch 10, wobei die Dienstlogikverknüpfungstabelle Dienstkettenidentifikationen und Dienstknoteneinrichtungssequenzen, die den Dienstkettenidentifikationen entsprechen, umfasst; und
die Dienstknoten aus Adressen von Hosts oder virtuellen Maschinen oder Adressen und Instanzenidentifikationen der Hosts oder der virtuellen Maschinen bestehen,
und
wobei das Erzeugen einer Dienstketten-Routing-Tabelle gemäß einer Netzwerktopologie und der Dienstlogikverknüpfungstabelle Folgendes umfasst:
Erfassen von Adressinformationen eines Dienstkettentabellenknotens in der Dienstlogikverknüpfungstabelle; Erfassen einer Vermittlungsvorrichtung bezüglich des Dienstkettentabellenknotens gemäß Informationen der Netzwerktopologie; und Erzeugen einer Dienstketten-Routing-Tabelle, die der Vermittlungsvorrichtung entspricht, gemäß der Dienstlogikverknüpfungstabelle und Senden der Dienstketten-Routing-Tabelle zur Vermittlungsvorrichtung,
und
wobei die Dienstketten-Routing-Tabelle Eingangsanschlüsse, Dienstkettenidentifikationen und entsprechende Ausgangsanschlüsse umfasst.

## Revendications

1. Système de gestion de chaînes de service, comprenant un dispositif d'arrangement de service, un dispositif de contrôle de politique et un dispositif d'exécution de politique, dans lequel:
le dispositif d'arrangement de service est configuré pour générer une table de mappage de chaînes de service (500) et envoyer la table de mappage de chaînes de service au dispositif de contrôle de politique, la table de mappage de chaînes de service comprenant des identifications de chaînes de service et des caractéristiques de conditions de chaînes de service correspondantes; **caractérisé en ce que**
le dispositif de contrôle de politique est configuré pour rechercher une identification de chaîne de service correspondante dans la table de mappage de chaînes de service selon une caractéristique de condition de chaîne de service d'un équipement utilisateur et générer une table de règles de politique et/ou une table de règles de détection de service de l'équipement utilisateur, la table de règles de politique et/ou la table de règles de détection de service comportant des informations d'opération d'identification de chaîne de service (501); l'identification de chaîne de service correspondant à un type de service; la table de règles de politique et/ou la table de règles de détection de service comprenant en outre un modèle de jugement de service, et le modèle de jugement de service comprenant des types de service et des informations de champ permettant de juger les types de service; et
le dispositif d'exécution de politique est configuré pour recevoir un message et exécuter une règle de politique et/ou une règle de détection de service pour le message reçu selon la table de règles de politique et/ou la table de règles de détection de service.

2. Système selon la revendication 1, dans lequel le dispositif d'arrangement de service est en outre configuré pour arranger une table de liens logiques de service, la table de liens logiques de service comprenant des identifications de chaînes de service et des séquences d'arrangements de noeuds de service correspondantes;
le système comprend en outre un dispositif de gestion de réseau et un dispositif de commutation;
le dispositif d'exécution de politique est en outre configuré pour transmettre le message obtenu après l'exécution de la règle de politique et/ou de la règle de détection de service au dispositif de commutation; le dispositif de gestion de réseau est configuré pour générer une table de routage de chaînes de service selon une topologie réseau et la table de liens logiques de service; et
le dispositif de commutation est configuré pour transmettre le message obtenu après l'exécution de la règle de politique et/ou de la règle de détection de service selon la table de routage de chaînes de service.

3. Système selon l'une quelconque des revendications 1-2, dans lequel les informations d'opération d'identification de chaîne de service sont utilisées pour ordonner au module d'exécution de politique d'ajouter une identification de chaîne de service à une position spécifique dans le message obtenu après l'exécution de la règle de politique et/ou de la règle de détection de service, la position spécifique étant configurée statiquement par le module de contrôle de politique ou étant indiquée par le module d'arrangement de service dans la table de mappage de chaînes de service.

4. Système selon la revendication 1, dans lequel les caractéristiques de conditions de chaînes de service comprennent des types de service, des niveaux utilisateur, des types d'accès et des états de réseau sans fil; et le dispositif de contrôle de politique est configuré pour:
lorsque l'équipement utilisateur accède à un réseau, rechercher un type de service correspondant dans les caractéristiques de conditions de chaînes de service de la table de mappage de chaînes de service selon un niveau utilisateur, un type d'accès et un état de réseau sans fil de l'équipement utilisateur, rechercher des informations de champ correspondantes permettant de juger le type de service dans le modèle d'identification de service selon le type de service recherché, et s'il est jugé que les informations de champ recherchées permettant de juger le type de service sont un champ ou une combinaison d'une pluralité de champs au niveau des couches 2-4, sauvegarder une identification utilisateur dans la table de règles de politique de l'utilisateur, et sauvegarder le type de service recherché et les informations de champ permettant de juger le type de service dans le modèle de jugement de service de la table de règles de politique de l'utilisateur; et
s'il est jugé que les informations de champ recherchées permettant de juger le type de service sont des champs au niveau des couches 4-7, sauvegarder l'identification utilisateur dans la table de règles de détection de service de l'utilisateur, et sauvegarder le type de service recherché et les informations de champ permettant de juger le type de service dans le modèle de jugement de service de la table de règles de détection de service de l'utilisateur,
le modèle d'identification de service étant généré par le dispositif d'arrangement de service ou étant configuré statiquement par le dispositif de contrôle de politique; et le modèle d'identification de service comportant les types de service et les informations de champ permettant de juger les types de service,
et,
le dispositif d'exécution de politique étant configuré pour:
sauvegarder la table de règles de politique et la table de règles de détection de service; recevoir un message, rechercher un type de service du message reçu dans le modèle de jugement de service dans la table de règles de politique selon des informations de champ permettant de juger le type de service dans le message, insérer une identification de chaîne de service dans le message reçu selon une opération correspondant au type de service recherché, et transmettre le message obtenu après l'insertion de l'identification de chaîne de service au dispositif de commutation.

5. Système selon la revendication 4, dans lequel le dispositif d'exécution de politique est en outre configuré pour:
lorsque le type de service du message reçu n'est pas recherché dans le modèle de jugement de service dans la table de règles de politique, rechercher le type de service du message reçu dans le modèle de jugement de service dans la table de règles de détection de service, insérer l'identification de chaîne de service dans le message reçu selon une opération correspondant au type de service recherché, et transmettre le message au dispositif de commutation,
ou,
le dispositif d'exécution de politique étant en outre configuré pour:
lorsque le type de service du message de données reçu n'est pas recherché dans le modèle de jugement de service de la table de règles de détection de service, quitter le traitement de chaînes de service.

6. Système selon la revendication 2, dans lequel les noeuds de service consistent en des adresses d'hôtes ou de machines virtuelles, ou des adresses et des identifications d'instance des hôtes ou des machines virtuelles,
et,
le dispositif de gestion de réseau étant configuré pour:
acquérir des informations d'adresse d'un noeud de table de chaînes de service dans la table de liens logiques de service;
acquérir un dispositif de commutation associé au noeud de table de chaînes de service selon des informations de la topologie réseau; et générer une table de routage de chaînes de service correspondant au dispositif de commutation selon la table de liens logiques de service et envoyer la table de routage de chaînes de service au dispositif de commutation,
et,
la table de routage de chaînes de service comprenant des ports d'entrée, des identifications de chaînes de service et des ports de sortie correspondants.

7. Dispositif de contrôle de politique, comprenant
un module de recherche configuré pour rechercher une identification de chaîne de service correspondante dans une table de mappage de chaînes de service selon une caractéristique de condition de chaîne de service d'un équipement utilisateur et générer une table de règles de politique et/ou une table de règles de détection de service de l'équipement utilisateur, la table de règles de politique et/ou la table de règles de détection de service comportant des informations d'opération d'identification de chaîne de service ; l'identification de chaîne de service correspondant à un type de service; la table de règles de politique et/ou la table de règles de détection de service comprenant en outre un modèle de jugement de service, et le modèle de jugement de service comprenant des types de service et des informations de champ permettant de juger les types de service.

8. Dispositif de contrôle de politique selon la revendication 7, dans lequel les caractéristiques de conditions de chaînes de service comprennent des types de service, des niveaux utilisateur, des types d'accès et des états de réseau sans fil; et le module de recherche est configuré pour:
lorsque l'équipement utilisateur accède à un réseau, rechercher un type de service correspondant dans les caractéristiques de conditions de chaînes de service de la table de mappage de chaînes de service selon un niveau utilisateur, un type d'accès et un état de réseau sans fil de l'équipement utilisateur, et rechercher des informations de champ correspondantes permettant de juger le type de service dans un modèle d'identification de service selon le type de service recherché;
s'il est jugé que les informations de champ recherchées permettant de juger le type de service sont un champ ou une combinaison d'une pluralité de champs au niveau des couches 2-4, sauvegarder une identification utilisateur dans la table de règles de politique de l'utilisateur, et
sauvegarder le type de service recherché et les informations de champ permettant de juger le type de service dans le modèle de jugement de service de la table de règles de politique de l'utilisateur; et s'il est jugé que les informations de champ recherchées permettant de juger le type de service sont des champs au niveau des couches 4-7, sauvegarder l'identification utilisateur dans la table de règles de détection de service de l'utilisateur, et sauvegarder le type de service recherché et les informations de champ permettant de juger le type de service dans le modèle de jugement de service de la table de règles de détection de service de l'utilisateur.

9. Procédé de gestion de chaînes de service, comprenant:
générer une table de mappage de chaînes de service (500); **caractérisé en ce que**
rechercher une identification de chaîne de service correspondante dans la table de mappage de chaînes de service selon une caractéristique de condition de chaîne de service d'un équipement utilisateur et générer une table de règles de politique et/ou une table de règles de détection de service de l'équipement utilisateur, la table de règles de politique et/ou la table de règles de détection de service comportant des informations d'opération d'identification de chaîne de service (501); l'identification de chaîne de service correspondant à un type de service; la table de règles de politique et/ou la table de règles de détection de service comprenant en outre un modèle de jugement de service, et le modèle de jugement de service comprenant des types de service et des informations de champ permettant de juger les types de service; et
recevoir un message et exécuter une règle de politique et/ou une règle de détection de service pour le message reçu selon la table de règles de politique et/ou la table de règles de détection de service (502).

10. Procédé selon la revendication 9, dans lequel le procédé comprend en outre:
arranger une table de liens logiques de service, la table de liens logiques de service comprenant des identifications de chaînes de service et des séquences d'arrangements de noeuds de service correspondantes (503);
générer une table de routage de chaînes de service selon une topologie réseau et la table de liens logiques de service (504); et
transmettre le message obtenu après l'exécution de la règle de politique et/ou de la règle de détection de service selon la table de routage de chaînes de service (505).

11. Procédé selon l'une quelconque des revendications 9-10, dans lequel les informations d'opération d'identification de chaîne de service sont utilisées pour ordonner d'ajouter une identification de chaîne de service à une position spécifique dans le message obtenu après l'exécution de la règle de politique et/ou de la règle de détection de service, la position spécifique étant configurée statiquement ou étant indiquée dans la table de mappage de chaînes de service.

12. Procédé selon la revendication 9, dans lequel lesdites étapes consistant à rechercher une identification de chaîne de service correspondante dans la table de mappage de chaînes de service selon une caractéristique de condition de chaîne de service d'un équipement utilisateur et à générer une table de règles de politique et/ou une table de règles de détection de service de l'équipement utilisateur comprennent:
lorsque l'équipement utilisateur accède à un réseau, rechercher un type de service correspondant dans les caractéristiques de conditions de chaînes de service de la table de mappage de chaînes de service selon un niveau utilisateur, un type d'accès et un état de réseau sans fil de l'équipement utilisateur, rechercher des informations de champ correspondantes permettant de juger le type de service dans le modèle d'identification de service selon le type de service recherché, et s'il est jugé que les informations de champ recherchées permettant de juger le type de service sont un champ ou une combinaison d'une pluralité de champs au niveau des couches 2-4, sauvegarder une identification utilisateur dans la table de règles de politique de l'utilisateur, et sauvegarder le type de service recherché et les informations de champ permettant de juger le type de service dans le modèle de jugement de service de la table de règles de politique de l'utilisateur; et
s'il est jugé que les informations de champ recherchées permettant de juger le type de service sont des champs au niveau des couches 4-7, sauvegarder l'identification utilisateur dans la table de règles de détection de service de l'utilisateur, et sauvegarder le type de service recherché et les informations de champ permettant de juger le type de service dans le modèle de jugement de service de la table de règles de détection de service de l'utilisateur,
le modèle d'identification de service étant généré à l'avance ou étant configuré statiquement; et le modèle d'identification de service comportant les types de service et les informations de champ permettant de juger les types de service,
et,
lesdites étapes consistant à recevoir un message et à exécuter une règle de politique et/ou une règle de détection de service pour le message reçu selon la table de règles de politique et/ou la table de règles de détection de service comprenant:
recevoir un message, rechercher un type de service du message reçu dans le modèle de jugement de service dans la table de règles de politique selon des informations de champ permettant de juger le type de service dans le message, insérer une identification de chaîne de service dans le message reçu selon une opération correspondant au type de service recherché, et transmettre le message obtenu après l'insertion de l'identification de chaîne de service à un dispositif de commutation.

13. Procédé selon la revendication 12 dans lequel, lorsque le type de service du message reçu n'est pas recherché dans le modèle de jugement de service dans la table de règles de politique, le procédé comprend en outre:
rechercher le type de service du message reçu dans le modèle de jugement de service dans la table de règles de détection de service, insérer l'identification de chaîne de service dans le message reçu selon une opération correspondant au type de service recherché, et transmettre le message au module de commutation,
ou,
lorsque le type de service du message de données reçu n'est pas recherché dans le modèle de jugement de service de la table de règles de détection de service, le procédé comprenant en outre:
quitter le traitement de chaînes de service.

14. Procédé selon la revendication 10, dans lequel la table de liens logiques de service comprend des identifications de chaînes de service et des séquences d'arrangements de noeuds de service correspondant aux identifications de chaînes de service; et
les noeuds de service consistent en des adresses d'hôtes ou de machines virtuelles, ou des adresses et des identifications d'instance des hôtes ou des machines virtuelles,
et,
ladite étape consistant à générer une table de routage de chaînes de service selon une topologie réseau et la table de liens logiques de service comprenant:
acquérir des informations d'adresse d'un noeud de table de chaînes de service dans la table de liens logiques de service; acquérir un dispositif de commutation associé au noeud de table de chaînes de service selon des informations de la topologie réseau; et générer une table de routage de chaînes de service correspondant au dispositif de commutation selon la table de liens logiques de service et envoyer la table de routage de chaînes de service au dispositif de commutation,
et,
la table de routage de chaînes de service comprenant des ports d'entrée, des identifications de chaînes de service et des ports de sortie correspondants.
